# EUROPEAN PATENT SPECIFICATION

(11) **EP 2 906 327 B1**
(45) Date of publication and mention of the grant of the patent: **21.02.2018**
(21) Application number: 13779717.1
(22) Date of filing: 10.10.2013
(51) Int. Cl.: B01D 46/24

(54) **FILTER ELEMENT AND FILTER BOWL FOR COMPRESSED AIR FILTER**
FILTERELEMENT UND FILTERSCHÜSSEL FÜR DRUCKLUFTFILTER
ÉLÉMENT FILTRANT ET CUVE DE FILTRE POUR FILTRE À AIR COMPRIMÉ

(30) Priority: 10.10.2012 US 201261712036 P
(43) Date of publication of application: 19.08.2015
(73) Proprietor: Ingersoll-Rand Company, Piscataway NJ 08855 (US)
(72) Inventor: JAKOP, Janez, 1370 Loqatec (SI)
(74) Representative: McCartney, Jonathan William
(86) International application number: PCT/US2013/064406
(87) International publication number: WO 2014/059189

(56) References cited:
- WO-A1-99/37386
- WO-A1-2009/012010
- US-A1- 2010 089 813
- US-A1- 2011 100 893

## Description

### FIELD OF THE INVENTION

The present invention relates to a filter element and filter bowl for a compressed air filter.

### BACKGROUND OF THE INVENTION

The prior art includes general air treatment technology, such as compressed air filters, dust filters, general purpose filters, coalescing filters and activated carbon filters. The compressed air filters may include a filter body containing a filter element which couples to a filter head. The filter head typically includes the fittings for connecting the filter into a compressed air system. The filter element requires periodic replacement to maintain the performance of the compressed air system. In particular, a standard schedule for filter element replacement significantly lowers the pressure drop loss across the compressed air system.

To accommodate ease in replacement of the filter element, the fittings for coupling to the compressed air system are generally limited to the filter head. The filter body contains the filter element and, with the exception of the drain, includes no attachments to the compressed air system. Thus, the filter body is designed for easy removal from the compressed air system together with the filter element for easy replacement of the filter element.

The prior art include grooves in the filter bowl which receive ribs extending radially from the filter element, thus restricting relative rotation between the bowl and filter element. Document WO 99/37386 discloses a filter element and a filter bowl wherein the filter element comprises an end cap with an outer rim having a slanted surface and wherein the open end of the filter bowl comprises a ledge with a corresponding slanted surface in order to support the filter element.

### SUMMARY OF THE INVENTION

It is an object of the present invention to provide a method and system for sealing a filter element with a filter body.

It is a further object of the present invention to provide a method and system for driving the filter element and filter body into engagement with the filter head.

It is still a further object of the present invention to provide a filter element and filter body which are adapted so as to not damage the filter element during the process of driving the filter element and filter bowl into engagement with the filter head.

It is yet a further object of the invention to provide a compressed air filter which does not force rotation of the filter element during installation. A filter element for a compressed air filter is provided. The filter element includes a filter element having an upper end cap and a lower end, the upper end cap having a rim extending and defining an outer perimeter of the upper end cap, the rim includes an outer slanted surface which extends radially outward and upward. A filter body is also provided and defines a cavity and includes an open upper end for receiving the filter element, the open upper end includes a ledge, wherein the ledge is slanted and extends radially inward and downward, defining a seat for matingly receiving the slanted surface of the rim of the upper end cap. A filter head is provided and includes a filter element connector for coupling to a collar of the filter element, and a filter body connector for coupling to the filter body.

### BRIEF DESCRIPTION OF THE DRAWINGS

Figure 1 is a part perspective view and part cross-sectional view of a prior art compressed air filter;
Figure 2 is an enlarged view of a portion of the part perspective view and part cross-sectional view of the prior art compressed air filter of Figure 1;
Figure 3 is an elevated view of a compressed air filter in accordance with the present invention;
Figure 4 is a perspective view of the upper portion of a filter element in accordance with the present invention;
Figure 5 is a perspective view of the upper portion of a filter body in accordance with the present invention; and
Figure 6 is a perspective view of the upper portion of the filter element of Figure 4 seated within the filter body of Figure 5 in accordance with the present invention.

### DETAILED DESCRIPTION OF THE INVENTION

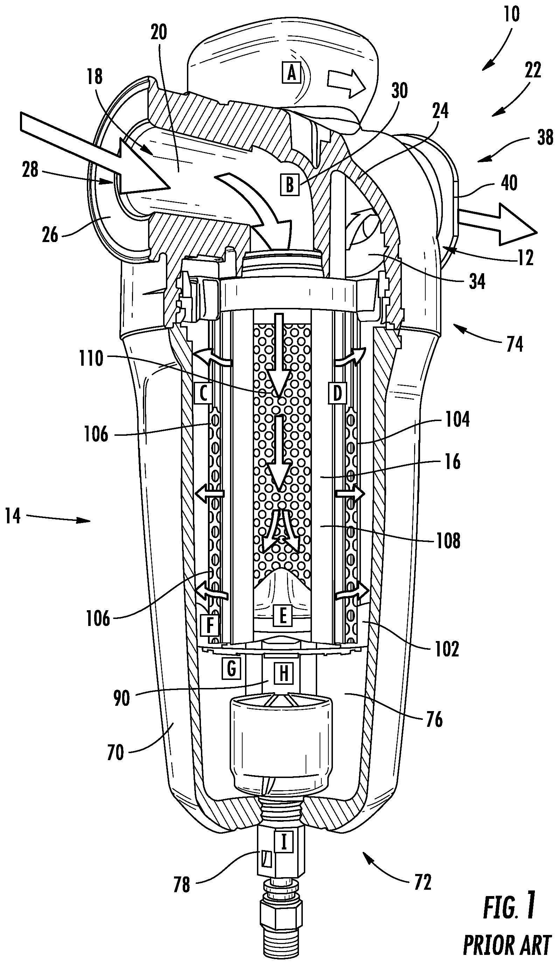

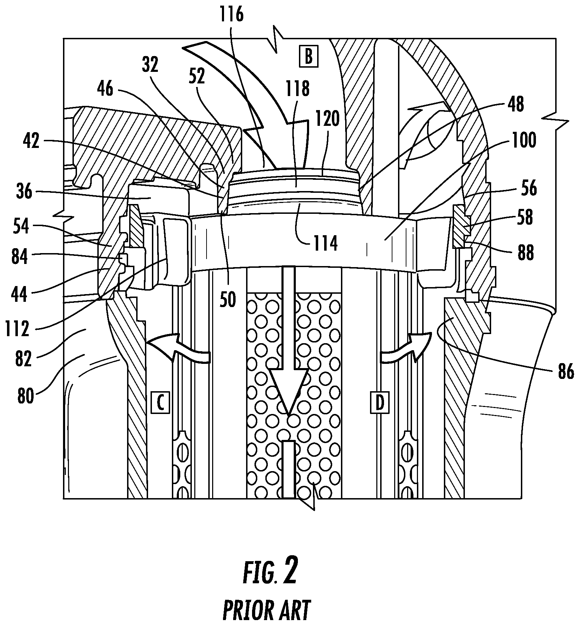

Figure 1 and Figure 2 show a prior art compressed air filter 10. The compressed air filter 10 includes a filter head 12, a filter body 14 and a filter element 16. The filter head 12 includes an inlet passage 18 formed by an inlet wall 20 and an outlet passage 22 formed by an outlet wall 24. The inlet passage 18 includes a first end 26 in fluid communication with an inlet port 28 and a second end 30 in fluid communication with a first filter element port 32 (Figure 2). The outlet passage 22 includes a first end 34 in fluid communication with a second filter element port 36 (Figure 2) and a second end 38 in fluid communication with an outlet port 40.

The filter head 12 further includes a filter element connector 42 and a filter body connector 44. The filter element connector 42 includes a first cylindrical collar 46 which forms the first filter element port 32. The first cylindrical collar 46 extends downward from the filter head 12 and includes an inner cylindrical wall 48 and a lower annular edge 50. A first abutement or stop 52 is provided at an upper end of the inner cylindrical wall 48. The first cylindrical collar 46 includes an outside diameter, an inside diameter, and a length between the stop 52 and lower annular edge 50. The filter body connector 44 includes a second cylindrical collar 54 having an inside diameter which is larger than an outside diameter of the first cylindrical collar 46. The second cylindrical collar 54 includes an internal wall 56 having a thread 58. The second filter element port 36 is generally annularly shaped and is formed between the first cylindrical collar 46 and the second cylindrical collar 54.

The filter body 14 includes a generally cylindrical body 70 having a closed lower end 72 and an open upper end 74 which define a cavity 76. The closed end 72 includes a drain line 78. The upper end 74 includes an annular collar 80 having an outer wall 82 with a thread 84 and an inner wall 86 with a ledge 88. Vertical ribs 90 are formed within the cavity 76 of the cylindrical body 70 at the closed lower end 72.

The filter element 16 includes an upper end cap 100 and a lower end cap 102. The end caps 100, 102 may be made of nylon or another material. A cylindrical mesh wall 104 extends between the upper end cap 100 and the lower end cap 102. The cylindrical mesh wall 104 includes a plurality of openings 106. A cylindrical filter media 108 is enclosed within the end caps 100, 102 and cylindrical mesh wall 104. The filter media 108 forms an inner cylindrical fluid channel 110 between the upper end cap 100 and the openings 106 in the cylindrical mesh wall 104. Radial extensions 112 extend outwardly from the upper end cap 100. A collar 114 extends upward from the upper end cap 100. The collar 114 includes an upper edge 116 and an outer wall 118, the outer wall 118 provided with two o-rings 120. The collar 114 includes an outer diameter, and inner diameter and the outer wall 118 includes a length.

The prior art compressed air filter 10 is assembled by inserting the filter element 16 into filter body 14. The lower end cap 102 will abut the vertical ribs 90 and the radial extensions 112 will abut the ledge 88. The combination filter body 14 and filter element 16 is then inserted into the filter head 12 and threaded into place with the threads 84 of the filter body 14 engaging the threads 58 of the filter head 12. The advancement of the filter body 14 and filter element 16 into the filter head 12 will be stopped by full engagement of the threads 84, 58 and the upper edge 116 with the first abutement 52, and the lower annular edge 50 with the upper end cap 100.

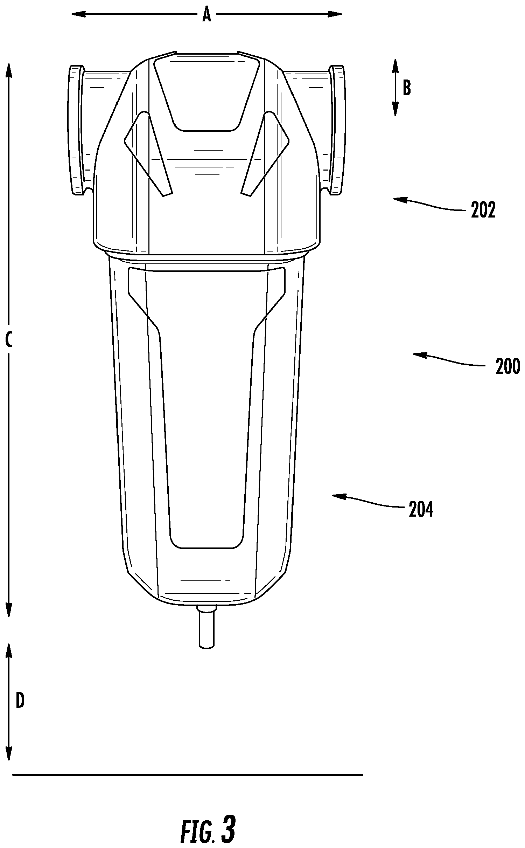

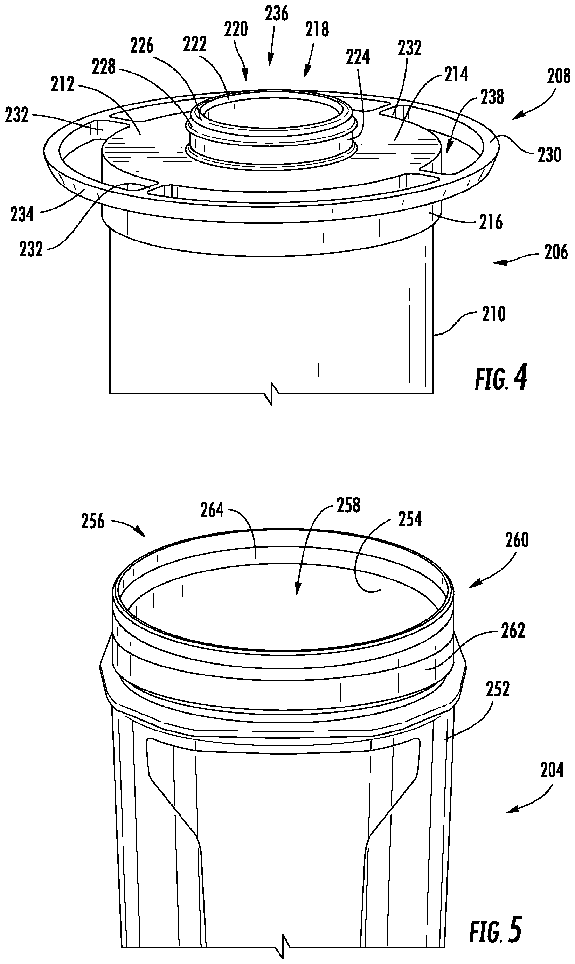

Figure 3 shown a compressed air filter 200 in accordance with the present invention. The compressed air filter 200 includes a filter head 202 and a filter body 204. The compressed air filter 200 shares many features with the compressed air filter 10. The same reference numerals are used to show the similar features. However, as shown in Figure 4, the present invention includes a filter element 206 having an upper end cap 208. The upper end cap 208 is coupled to an upper portion of a combination cylindrical mesh wall and cylindrical filter media generally designated by the reference 210. A lower end cap 102 (Figure 1) is coupled to the lower end of the combination wall and media 210 in a manner similar to the prior art compressed air filter 10.

The upper end cap 208 includes a main body portion 212 having a generally round planar surface 214 and a depending skirt portion 216. A collar 218 having an opening 220 is located at the planar surface 214. The collar 218 includes an upper edge 222 which defines a collar height extending between the planar surface 214 and the upper edge 222. The collar 218 further includes an outer wall 224 having a groove 226 which receives a seal such as an O-ring 228. A rim 230 is located radially spaced outward from the main body portion 212. The rim 230 and main body portion 212 are connected via a plurality of bridges or spokes 232. The rim 230 includes an outer slanted surface 234 which extends radially outward and upward.

The collar 218 defines an inlet opening or coupling 236. The inlet coupling 236 is intended for coupling to the filter element connector 42 (Figure 2) of the filter head 202 in a manner similar to the prior art disclosed above. The combination of the rim 230, main body portion 212 and spokes 232 define an outlet opening or coupling 238. The outlet coupling 238 is intended for coupling to the second filter element port 36 of the filter head 202.

Figure 5 shows an upper portion of the filter body 254. The filter body 254 is shown to include a generally cylindrical body having an outer wall 252, an inner wall 254, and an open upper end 256. The filter body 254 defines a cavity 258 which receives the filter element 206. The open upper end 256 includes an annular collar 260 with a thread 262 extending along the outer wall 252, and a ledge or seat 264 at the open upper end 256 and along the inner wall 254. The ledge 264 is slanted and extends radially inward and downward.

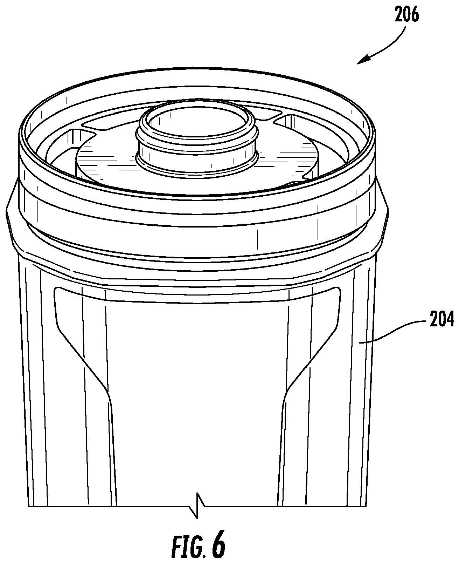

Figure 6 shows the upper portion of the filter element 206 received within the cavity 258 of the filter body 204. It will be appreciated that the filter element 206 is fully inserted within the cavity 258 with the slanted surface 234 of the filter element 206 coming into engagement with the slanted ledge 264 of the filter body 204, as well as with the lower end cap 102 coming into contact with the vertical ribs 90. It will be further appreciated that the filter element 206 is generally free to rotate within the filter body 204, in contrast to the prior art which locks the filter element 16 in place with respect to the filter body 14.

With the filter element 206 installed within the cavity 258 of the filter body 204, the assembly may be secured to the filter head 202. In particular, the annular collar 260 of the filter body 204 is aligned with the filter body connection 44 and the collar 218 of the filter element 206 is aligned with the filter element connection 42 of the filter head 202. The filter body 204 is rotated with respect to the filter head 202 so that the thread 262 of the filter body 204 engages the thread 58 of the filter head 202. Further relative rotation will cause the filter body 204 to be drawn up into the filter head 202, along with the collar 218 which is received by the first cylindrical collar 46 of the filter head 202. The O-ring 228 will create a seal between the collar 218 and the collar 46.

As the filter body 204 is rotated within the filter head 202, the filter element 206 is further inserted into the filter head 202 creating additional frictional force between the filter element 206 and filter head 202. At some point, the frictional force may exceed with frictional force of the slanted surface 234 in engagement with the slanted ledge 264 and the frictional force of the lower end cap 102 resting upon the vertical ribs 90. As the frictional force is exceeded, the filter element 206 is free to rotate, rather than binding and possibly tearing or damaging the O-ring 228.

Thus, a fluid flow channel extends from the inlet port 28, the first filter element port 36, the inlet coupling 236, and the inner cylindrical fluid channel 110 within the filter element 206, the cavity 258 of the filter body 204, to the outlet coupling 238, the second filter element port 36, the outlet passage 22, and the outlet port 40.

The invention relates to attaching the filter element to a filter body. The filter element is contained in the filter body. When the filter body is screwed into the filter head, the filter element nose or collar and o-ring are forced into engagement with the corresponding bore in the filter head. The invention provides a rim located on an upper part of the filter element. The rim seats into an angled seat inside the filter body to ensure that the filter element is firmly held within the filter body during installation of the filter body and filter element to the filter head. The angled seat in the filter body forces the rim on the filter element upward into the filter head.

## Claims

1. A combination filter element and filter body for a compressed air filter, the combination comprising:
a filter element (206) having an upper end cap (208), the upper end cap having a rim (230) extending and defining an outer perimeter of the upper end cap, the rim includes an outer slanted surface (234) which extends radially outward and upward; and
a filter body (204) defining a cavity (258) and having an open upper end (256) for receiving the filter element, the open upper end includes a ledge (264), wherein the ledge is slanted and extends radially inward and downward, defining a seat for matingly receiving the slanted surface of the rim of the upper end cap, and the upper end provided with a thread (262) for rotatably engaging a filter head,
wherein the outer slanted surface is slidable against the ledge such that the filter element is rotatable relative to the filter body.

2. The combination filter element and filter body of claim 1, wherein the filter element includes a lower end (102), and the filter body includes a lower end (72) and an abutment (90) within the cavity at the lower end of the filter body, wherein the filter body receives the filter element and the lower end of the filter element engages the abutment and the outer slanted surface engages the ledge.

3. The combination filter element and filter body of claim 1 or 2, wherein the upper end cap includes a main body portion (212) having a generally round planar surface (214), a collar (218) having an inlet opening (220) located at the planar surface, the rim extends around the main body portion and forms at least one outlet opening (238).

4. The combination filter element and filter body of claim 1, wherein the filter element includes a lower end cap (102), and a filter media (210) extending between the upper end cap and the lower end cap.

5. The combination filter element and filter body of claim 3, wherein the collar includes a peripheral groove (226) extending about an outer surface, and an o-ring (228) is received by the peripheral groove.

6. The combination filter element and filter body of claim 1, wherein the filter body (204) includes a generally cylindrical body having a generally closed lower end (72), the upper end (256) includes an annular collar (260) having an outer wall (252) provided with the thread (262) and an inner wall (254) providing the slanted ledge (264).

7. A compressed air filter comprising the combination filter element (206) and filter body (204) of claim 3 and a filter head (202), the filter head having a filter element connector for coupling to the collar of the filter element, and a filter body connector for coupling to the filter body.

## Patentansprüche

1. Kombinationsfilterelement und Filterkörper für einen Druckluftfilter, die Kombination bestehend aus:
einem Filterelement (206) mit einer oberen Endkappe (208), wobei die obere Endkappe einen Rand (230) aufweist, die den äußeren Umfang der oberen Endkappe ausdehnt und definiert, wobei der Rand eine äußere schräge Fläche (234) aufweist, die sich radial nach außen und oben erstreckt; und
einen Filterkörper (204), der einen Hohlraum (258) definiert und ein offenes oberes Ende (256) zum Aufnehmen des Filterelements aufweist, wobei das offene obere Ende einen Vorsprung (264) aufweist, wobei der Vorsprung schräg nach innen und nach unten geneigt ist und sich radial nach innen und nach unten erstreckt, und einen Sattel definiert, der die schräge Oberfläche des Randes des oberen Enddeckels in Gegenrichtung aufnimmt, und das obere Ende mit einem Gewinde (262) versehen ist, um einen Filterkopf drehbar in Eingriff zu bringen,
wobei die äußere Schrägfläche gegen die Kante gleitbar ist, so dass das Filterelement relativ zum Filterkörper drehbar ist.

2. Kombinationsfilterelement und Filterkörper gemäß Anspruch 1, wobei das Filterelement ein unteres Ende (102) und der Filterkörper ein unteres Ende (72) und ein Widerlager (90) innerhalb des Hohlraums am unteren Ende des Filterkörpers aufweist, wobei der Filterkörper das Filterelement aufnimmt und das untere Ende des Filterelements in das Widerlager und die äußere schräge Oberfläche in die Kante eingreift.

3. Kombinationsfilterelement und Filterkörper gemäß Anspruch 1 oder 2, wobei die obere Endkappe einen Hauptkörperabschnitt (212) mit einer allgemein runden ebenen Fläche (214), einen Kragen (218) mit einer Einlassöffnung (220), die an der ebenen Fläche angeordnet ist, umfasst, der Rand sich um den Hauptkörperabschnitt erstreckt und mindestens eine Auslassöffnung (238) bildet.

4. Kombinationsfilterelement und Filterkörper gemäß Anspruch 1, wobei das Filterelement eine untere Endkappe (102) und ein Filtermedium (210) aufweist, das sich zwischen der oberen Endkappe und der unteren Endkappe erstreckt.

5. Kombinationsfilterelement und Filterkörper gemäß Anspruch 3, wobei der Kragen eine umlaufende Nut (226) aufweist, die sich um eine Außenfläche erstreckt, und ein O-Ring (228) von der umlaufenden Nut aufgenommen wird.

6. Kombinationsfilterelement und Filterkörper gemäß Anspruch 1, wobei der Filterkörper (204) einen allgemein zylindrischen Körper mit einem allgemein geschlossenen unteren Ende (72) aufweist, das obere Ende (256) einen ringförmigen Kragen (260) mit einer Außenwand (252), die mit dem Gewinde (262) versehen ist, und eine Innenwand (254), die die schräge Kante (264) bereitstellt, aufweist.

7. Druckluftfilter, bestehend aus dem Kombinationsfilterelement (206) und dem Filterkörper (204) gemäß Anspruch 3 und einem Filterkopf (202), wobei der Filterkopf einen Filterelementanschluss zur Kopplung an den Kragen des Filterelements und einen Filterkörperanschluss zur Kopplung an den Filterkörper aufweist.

## Revendications

1. Une combinaison d'un élément de filtre et d'un corps de filtre pour un filtre à air comprimé, la combinaison comprenant :
un élément de filtre (206) ayant un capuchon d'extrémité supérieur (208), le capuchon d'extrémité supérieur ayant une bordure (230) s'étendant et définissant un périmètre extérieur du capuchon supérieur, la jante comprend une surface inclinée externe (234) qui s'étend radialement vers l'extérieur et vers le haut ; et
un corps de filtre (204) définissant une cavité (258) et ayant une extrémité supérieure ouverte (256) pour recevoir l'élément de filtre, l'extrémité supérieure ouverte comprend un rebord (264) dans lequel le rebord est incliné et s'étend radialement vers l'intérieur et vers le bas, la définition d'un siège pour recevoir par accouplement la surface inclinée du rebord de l'embout supérieur, et l'extrémité supérieure pourvue d'un filetage (262) pour engager de manière rotative une tête de filtre,
dans lequel la surface inclinée extérieure peut coulisser contre le rebord de sorte que l'élément de filtre peut tourner par rapport au corps de filtre.

2. L'élément de filtre combiné et le corps de filtre selon la revendication 1, dans lequel l'élément de filtre comprend une extrémité inférieure (102) et le corps de filtre comprend une extrémité inférieure (72) et une butée (90) dans la cavité à l'extrémité inférieure du corps de filtre, dans lequel le corps de filtre reçoit l'élément de filtre et l'extrémité inférieure de l'élément de filtre engage la butée et la surface inclinée extérieure engage le rebord.

3. L'élément de filtre combiné et le corps de filtre selon la revendication 1 ou 2, dans lequel le capuchon d'extrémité supérieur comprend une partie de corps principal (212) ayant une surface plane généralement ronde (214), un collier (218) ayant une ouverture d'entrée (220) situé à la surface plane, la jante s'étend autour de la partie de corps principal et forme au moins une ouverture de sortie (238).

4. L'élément de filtre combiné et le corps de filtre selon la revendication 1, dans lequel l'élément de filtre comprend un capuchon d'extrémité inférieur (102) et un milieu filtrant (210) s'étendant entre le capuchon d'extrémité supérieur et le capuchon d'extrémité inférieur.

5. L'élément de filtre combiné et le corps de filtre selon la revendication 3, dans lequel le collier comprend une rainure périphérique (226) s'étendant autour d'une surface extérieure, et un joint torique (228) est reçu par la rainure périphérique.

6. L'élément de filtre combiné et le corps de filtre selon la revendication 1, dans lequel le corps de filtre (204) comprend un corps généralement cylindrique ayant une extrémité inférieure généralement fermée (72), l'extrémité supérieure (256) comprend un collier annulaire (260) ayant une paroi externe (252) une pourvue du filetage (262) et une paroi interne (254) formant le rebord incliné (264).

7. Le filtre à air comprimé comprenant l'élément de filtre combiné (206) et le corps de filtre (204) de la revendication 3 et une tête de filtre (202), la tête de filtre ayant un connecteur d'élément de filtre pour coupler au collier de l'élément de filtre un connecteur de corps de filtre pour le couplage au corps de filtre.
